# FASCICULE DE BREVET EUROPEEN

(11) **EP 3 006 279 B1**
(45) Date de publication et mention de la délivrance du brevet: **01.05.2019**
(21) Numéro de dépôt: 15186193.7
(22) Date de dépôt: 22.09.2015
(51) Int. Cl.: B60S 1/08, B60S 1/52, B60S 1/56, G02B 27/00

(54) **DISPOSITIF DE NETTOYAGE D'UNE CAMERA D'AIDE À LA CONDUITE D'UN VÉHICULE AUTOMOBILE**
REINIGUNGSVORRICHTUNG FÜR EINE KAMERA EINES FAHRERASSISTENZSYSTEMS IN EINEM KRAFTFAHRZEUG
DEVICE FOR CLEANING A DRIVING ASSISTANCE CAMERA OF A MOTOR VEHICLE

(30) Priorité: 10.10.2014 FR 1459716
(43) Date de publication de la demande: 13.04.2016
(73) Titulaire: Valeo Systèmes d'Essuyage, 78322 Le Mesnil Saint Denis (FR)
(72) Inventeur: TREBOUET, Marcel, 78450 CHAVENAY (FR)
(74) Mandataire: Vincent, Catherine Marie Marguerite

(56) Documents cités:
- EP-A1- 2 845 773
- WO-A1-2012/138455
- WO-A1-2015/110439
- WO-A1-2016/008722
- US-A1- 2013 048 036

## Description

L'invention a trait au domaine de l'aide à la conduite et notamment aux caméras implantées sur certains véhicules. Plus particulièrement, l'invention a trait à un dispositif de nettoyage d'une telle caméra pour que la qualité de l'information d'aide à la conduite fournie au conducteur soit optimale.

Certains véhicules automobiles sont désormais équipés de moyens de prise de vue, et particulièrement de caméra, pour aider le conducteur notamment dans ses manoeuvres de stationnement et/ou de marche arrière. On comprend que l'information fournie au conducteur par ces moyens de prise de vue est d'autant plus utile lorsque l'image acquise est nette.

Les documents US2013/048036, WO2015/1110439 et WO2016/008722 divulguent des dispositifs de nettoyage de lentilles de caméra d'un véhicule automobile par l'intermédiaire d'une tête de nettoyage rendue mobile notamment pour prendre une position active dans laquelle la tête de nettoyage s'étend au moins en partie en regard de la lentille pour permettre l'éjection de liquide de nettoyage en direction de ladite lentille.

La présente invention s'inscrit dans ce contexte et elle a pour objectif de proposer un dispositif de nettoyage des caméras qui soit particulièrement efficace. Dans ce but, l'invention a pour objet un dispositif de nettoyage d'une lentille de caméra d'un véhicule automobile par l'intermédiaire d'une tête de nettoyage, le dispositif comportant des moyens d'entraînement de la caméra ou de la tête de nettoyage, aptes à générer un déplacement longitudinal relatif de la tête de nettoyage par rapport à la caméra entre une position passive dans laquelle la tête de nettoyage est disposée hors du champ de prise de vue de la caméra et une position active dans laquelle la tête de nettoyage s'étend en regard de la lentille pour permettre l'éjection de liquide de nettoyage en direction de ladite lentille, la caméra comportant un objectif à l'extrémité duquel ladite lentille est disposée. La tête de nettoyage présente une forme complémentaire dudit objectif de manière à pouvoir être disposée autour de l'objectif dans ladite position passive, la tête de nettoyage présentant un axe qui est confondu avec un axe de l'objectif et de la lentille. L'objectif de la caméra présente une section circulaire et la tête de nettoyage présente une forme annulaire de dimensions aptes à venir en recouvrement autour de l'objectif. Le dispositif de nettoyage comporte un tuyau d'alimentation de liquide relié à la tête de nettoyage, qui comporte en outre une face interne munie d'une pluralité de buses par lesquelles le liquide de nettoyage est apte à sortir de la tête en direction de la lentille dans la position active.

Dans un mode de mise en oeuvre préféré de l'invention, on prévoit que la tête de nettoyage ou la caméra se déplace relativement l'une par rapport à l'autre dans une direction longitudinale, c'est-à-dire sensiblement l'axe optique de la caméra. Les moyens d'entraînement sont agencés pour réaliser un déplacement longitudinal relatif de la tête de nettoyage par rapport à la caméra, de sorte que dans la position passive, la tête de nettoyage se trouve longitudinalement en amont de la lentille tandis que dans la position active, la tête se trouve longitudinalement à distance de la caméra, en aval de la lentille.

On entend ici par « en aval » et « en amont » des positions définies par rapport à l'axe optique de la caméra et par rapport au sens de la prise de vue. Lorsque la caméra est une caméra de recul, disposée à l'arrière du véhicule et tournée de manière à filmer une scène de route située derrière le véhicule, le terme « en aval » signifie que la tête se trouve positionnée plus proche de l'arrière du véhicule que la caméra, et l'on comprend que si la caméra était disposée à l'avant du véhicule, le terme « en aval » signifierait que la tête est positionnée plus proche de l'avant du véhicule que la caméra.

Selon une caractéristique de l'invention, la face interne est inclinée par rapport au plan perpendiculaire à l'axe de la tête de nettoyage annulaire, de sorte que les buses soient orientées pour éjecter le liquide en direction de l'axe de la tête de nettoyage annulaire.

Selon un autre groupe de caractéristiques, le dispositif de nettoyage comporte des moyens de guidage en déplacement longitudinal de la caméra ou de la tête de nettoyage. Les moyens de guidage peuvent être portés par les moyens d'entraînement et ils peuvent consister en une tige solidaire des moyens d'entraînement et en un fourreau disposé en saillie de la caméra ou de la tête de nettoyage et dans lequel ladite tige est apte à coulisser.

L'invention a également pour objet un dispositif de nettoyage d'une lentille de caméra d'un véhicule automobile par l'intermédiaire d'une tête de nettoyage, le dispositif comportant des moyens d'entraînement de la caméra ou de la tête de nettoyage, aptes à générer un déplacement longitudinal relatif de la tête de nettoyage par rapport à la caméra entre une position passive dans laquelle la tête de nettoyage est disposée hors du champ de prise de vue de la caméra et une position active dans laquelle la tête de nettoyage s'étend en regard de la lentille pour permettre l'éjection de liquide de nettoyage en direction de ladite lentille, la caméra comportant un objectif à l'extrémité duquel ladite lentille est disposée, dans lequel les moyens d'entraînement de la tête de nettoyage ou de la caméra sont hydrauliques et comportent une chambre dans lequel est apte à coulisser un piston, solidaire de la caméra ou de la tête de nettoyage, sous l'effet de la pression d'un liquide circulant entre un premier et un deuxième accès formés dans ladite chambre, ledit piston étant rappelé en position par un ressort logé dans ladite chambre. Le premier accès peut être relié à un tuyau d'arrivé de liquide et le deuxième accès peut être relié à un tuyau distinct d'alimentation relié à une autre extrémité à la tête de nettoyage. Il est avantageux que le liquide faisant pression sur le piston, et déplaçant la caméra ou la tête de nettoyage, soit du liquide de nettoyage à la suite utilisé pour le nettoyage de la lentille.

Dans un mode de réalisation préféré de l'invention, les moyens d'entraînement sont rendus solidaires de la caméra, qui est apte à suivre le déplacement généré par lesdits moyens d'entraînement tandis que la tête de nettoyage reste fixe. On comprend que l'on pourra toutefois prévoir que les moyens d'entraînement soient rendus solidaires de la tête de nettoyage, qui est apte à suivre le déplacement généré par lesdits moyens d'entraînement tandis que la caméra reste fixe.

L'invention concerne également un véhicule automobile comportant un dispositif de nettoyage d'une caméra tel qu'il vient d'être précédemment décrit.

Dans un mode de mise en oeuvre préféré de l'invention, la caméra apte à être nettoyée par ledit dispositif de nettoyage est une caméra de recul, disposée à l'arrière du véhicule et orientée pour prendre des vues d'une scène de route s'étendant à l'arrière du véhicule. L'invention trouve ainsi une application particulièrement avantageuse, mais non exclusive, dans le domaine de l'assistance au parking des véhicules automobiles.

Dans le cas où le dispositif de nettoyage prévoit de déplacer la caméra par rapport à la tête de nettoyage, cette dernière est rendue fixe par rapport à la structure du véhicule automobile, de sorte à être sensiblement affleurante par rapport à la carrosserie extérieure du véhicule. La caméra est alors rendue mobile entre une position passive en retrait par rapport à la tête de nettoyage et une position active de prise de vue dans laquelle la lentille disposée à l'extrémité de la caméra est également affleurante par rapport à la carrosserie extérieure.

D'autres caractéristiques et avantages de la présente invention apparaitront plus clairement à l'aide de la description et des dessins parmi lesquels :
- la figure 1 est une vue en perspective, vue de trois quart avant, d'un dispositif de nettoyage selon l'invention, dans une position passive dans laquelle une tête de nettoyage du dispositif est disposée autour d'une caméra de ce dispositif, pour ne pas gêner la prise de vue par la caméra ;
- la figure 2 est une vue en perspective, vue de trois quart arrière, du dispositif de nettoyage de la figure 1, cette fois dans une position active dans laquelle la tête de nettoyage est apte à éjecter du liquide sur la lentille de la caméra ;
- les figures 3 et 4 sont des vues en perspective, de détail de la tête de nettoyage et des gicleurs qu'elle comporte, respectivement dans la position passive de la figure 1 et dans la position active de la figure 2 ;
- les figures 5 et 6 sont des vues de côté du dispositif de nettoyage tel qu'illustré précédemment et dans lequel un piston permettant le déplacement de la tête de nettoyage est rendu apparent en traits pointillés, la figure 5 illustrant le dispositif dans la position passive de la figure 1 tandis que la figure 6 illustre le dispositif dans la position active de la figure2.

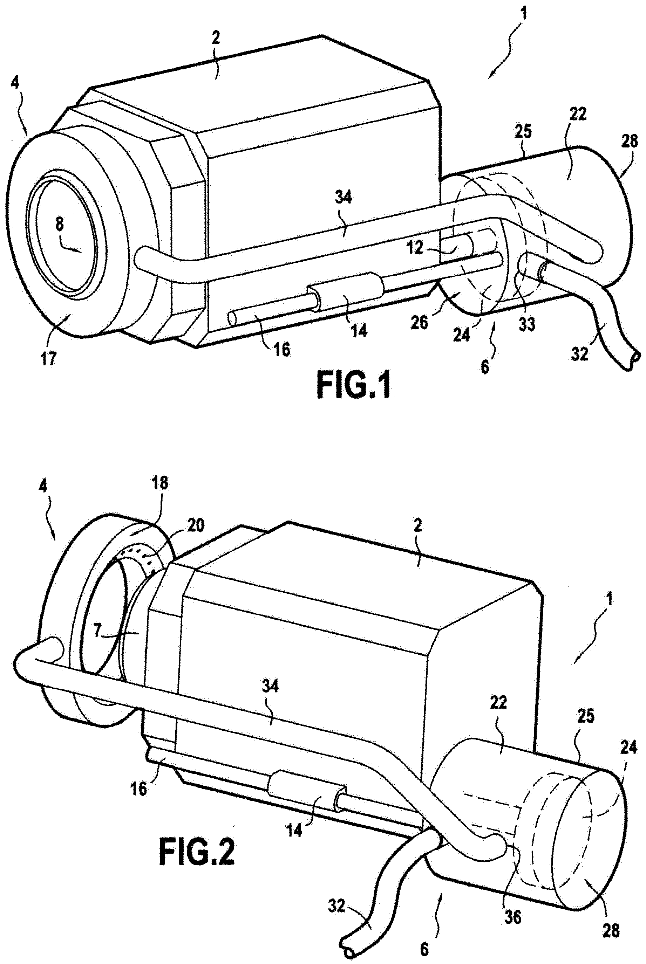

Un dispositif de nettoyage 1 selon l'invention comporte notamment une caméra 2 et une tête de nettoyage 4, ainsi que des moyens d'entraînement en translation 6 aptes à générer un déplacement relatif de la caméra par rapport à la tête de nettoyage, entre une position passive (visible sur la figure 1) dans laquelle la tête est escamotée autour de la caméra pour ne pas gêner la prise de vue et une position active (visible sur la figure 2) dans laquelle la tête de nettoyage est dégagée de la caméra pour s'étendre en regard de la lentille et permettre la fonction de nettoyage de cette dernière.

Dans le mode de réalisation illustré qui va suivre, les moyens d'entraînement 6 sont reliés directement à la caméra de sorte que le déplacement relatif entre la caméra et la tête de nettoyage est réalisé par le déplacement de la caméra. Dans ce mode de réalisation, il est avantageux de prévoir que la caméra et la tête de nettoyage soient implantées dans la structure du véhicule de sorte que l'extrémité de la caméra permettant la prise de vue et la face de la tête de nettoyage tournée vers l'extérieur du véhicule soient disposées de manière sensiblement affleurante par rapport à la carrosserie extérieure du véhicule lorsque la caméra doit acquérir des images de la scène de route, ici dans la position dite passive du dispositif de nettoyage.

La caméra 2 forme des moyens de prise de vue d'une scène de route située indifféremment aux alentours du véhicule, et avantageusement derrière le véhicule pour donner une information au conducteur lorsque celui-ci recule. La caméra comporte à une extrémité longitudinale, ici tournée vers l'arrière du véhicule, un objectif 7 présentant la forme d'un cylindre de section circulaire et qui présente à son extrémité libre une lentille 8, qu'il convient de nettoyer à une périodicité donnée, ou avant chaque utilisation de la caméra de recul.

La caméra comporte en outre une platine de connexion 10 d'un arbre d'entraînement en translation 12 disposé en sortie des moyens d'entraînement 6. L'arbre d'entraînement est ainsi rendu solidaire de la caméra et ses déplacements en translation longitudinale génèrent des déplacements longitudinaux correspondants de la caméra.

La caméra comporte également, tel que cela est visible sur les figures 1 et 2, au moins un fourreau 14 qui est disposé latéralement en saillie de la caméra de manière à présenter un alésage qui s'étend longitudinalement pour recevoir une tige de guidage 16 solidaire des moyens d'entraînement. Il pourra également être prévu des moyens de guidage longitudinal complémentaires, ici non représentés, portés par la structure du véhicule, qui permettent de supporter le poids de la caméra lors de ses déplacements longitudinaux.

La tête de nettoyage 4 présente une forme annulaire, dont l'axe est confondu avec l'axe de l'objectif de la caméra, et dont le diamètre interne est sensiblement supérieur au diamètre externe de l'objectif 7, pour pouvoir entourer celui-ci dans la position passive dans laquelle la tête de nettoyage est escamotée et disposée autour de l'objectif pour ne pas se trouver dans le champ de prise de vue de la caméra, devant la lentille.

La tête de nettoyage présente une face d'extrémité longitudinale externe 17 orientée vers l'extérieur du véhicule ainsi qu'une face d'extrémité longitudinale interne 18, tournée vers l'avant du véhicule selon le sens arbitraire choisi sur les figures et tournée vers la caméra lorsque le dispositif est dans la position dite active visible sur la figure 2.

La face d'extrémité externe est ici représentée plane mais on comprend qu'elle ne joue aucun rôle dans la fonction de nettoyage, et que dès lors, elle pourra présenter une forme différente notamment pour s'adapter à l'encombrement de la structure du véhicule autour de la caméra et pour venir en affleurement de la carrosserie extérieure du véhicule, et/ou pour permettre le plus grand débattement possible de la tête de nettoyage dans l'espace alloué.

La face d'extrémité longitudinale interne 18 comporte des buses de pulvérisation 20 qui sont disposées sur tout le pourtour de la tête. On prévoit une disposition régulière des buses, le nombre de buses et l'espacement entre chaque buse étant laissés à l'appréciation du constructeur. Les buses sont disposées en cercle autour de l'axe de la tête de nettoyage, et on comprend que le cercle formé par les buses présente un diamètre supérieur au diamètre de la lentille puisque la face interne de la tête qui les porte est apte à prendre une position passive autour de l'objectif portant la lentille. Il en résulte que les buses et la face interne sont agencées de sorte que les buses sont orientées pour éjecter le liquide, lorsque le dispositif est en position active, vers l'intérieur, c'est à dire en direction de l'axe de la tête de nettoyage annulaire. Selon le mode de réalisation illustré, ladite face interne comporte un plan incliné par rapport au plan perpendiculaire à l'axe de la tête de nettoyage annulaire, en formant ainsi une portion de cône, et les buses sont agencées pour réaliser une éjection du liquide perpendiculaire à la face interne.

Les moyens d'entraînement en translation 6 sont aptes à commander la translation de la caméra en éloignement et en rapprochement de la tête de nettoyage. On va décrire par la suite un mode de réalisation particulièrement avantageux, dans lequel les moyens d'entraînement sont hydrauliques et dans lequel c'est le liquide de nettoyage qui sert également de liquide de mise sous pression du système hydraulique. On détaillera en variante ci-après d'autres modes de réalisation possibles de ces moyens d'entraînement.

Dans le cas illustré, les moyens d'entraînement comportent notamment une chambre 22 dans laquelle est apte à coulisser un piston 24 solidaire d'une bielle formant l'arbre d'entraînement en translation 12 telle qu'il a été décrit précédemment.

La chambre 22 consiste en un cylindre creux, formé par une paroi circulaire 25 et délimité longitudinalement par une première paroi dite proximale 26, tournée vers la caméra, et par une deuxième paroi dite distale 28. La paroi proximale 26 est percée en son centre pour laisser passage à la bielle 12 qui relie la caméra au piston logé à l'intérieur de la chambre. Des moyens d'étanchéité sont prévus entre cette ouverture dans la paroi proximale et la bielle pour ne pas laisser fuir du liquide présent dans la chambre. Le piston 24 est logé dans la chambre et il présente une forme de disque de dimensions complémentaires de celles de la paroi circulaire, légèrement inférieures pour permettre son coulissement dans la chambre sans toutefois que du liquide puisse circuler entre le piston et la paroi circulaire.

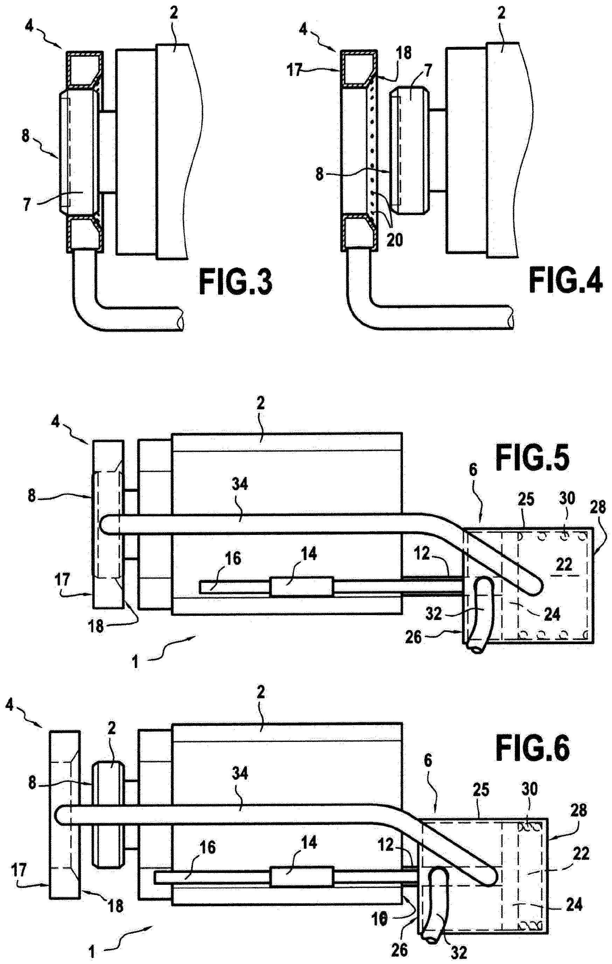

Un ressort 30, de type ressort à spirale, visible sur les figures 5 et 6, est disposé entre la paroi distale 28 et la face 31 du piston tournée vers cette paroi distale. Le ressort est contraint de sorte qu'il tend à pousser le piston vers la paroi proximale.

Tel que cela est visible sur les figures 1 et 2 par exemple, deux tuyaux sont raccordés à la chambre 22 des moyens d'entraînement. Un premier tuyau 32, dit d'approvisionnement en liquide de la chambre, débouche dans la chambre au niveau d'un premier orifice 33, réalisé dans la paroi circulaire de la chambre et disposé à proximité de la paroi proximale. Un deuxième tuyau 34, dit d'alimentation en liquide de la tête de nettoyage, relie cette tête de nettoyage à la chambre au niveau d'un deuxième orifice 36, réalisé également dans la paroi circulaire de la chambre, aligné longitudinalement avec le premier orifice et disposé sensiblement au centre de la chambre.

Les moyens d'entraînement comportent en outre, tel que cela a pu être évoqué précédemment, une tige de guidage 16 qui s'étend longitudinalement en saillie de la paroi proximale de la chambre et qui présente un diamètre tel que cette tige peut venir loger dans le fourreau solidaire de la caméra. La dimension longitudinale de la tige est telle qu'elle ne peut s'échapper du fourreau quelle que soit la position active ou passive du dispositif. On calculera cette dimension longitudinale notamment en fonction du débattement du piston dans la chambre des moyens d'entraînement.

On va tout d'abord décrire le dispositif de nettoyage de l'invention dans une position passive, notamment en se référant aux figures 1 et 5. Dans cette position passive, la tête de nettoyage 4 est disposée autour de l'objectif 7 de la caméra, en retrait de la lentille 8, de manière à ne pas se trouver dans le champ de vision de la caméra. La tête ne gêne pas ainsi la qualité de prise de vue et l'aide à la conduite apportée au conducteur.

Le ressort 30 logé à l'intérieur de la chambre 22 pousse le piston 24 dans une première position extrême, dans laquelle le piston est au plus proche de la paroi d'extrémité proximale. Dans cette première position extrême, le piston est le plus en arrière possible d'après le sens choisi arbitrairement sur les figures et donc la caméra, rendue solidaire du piston par l'arbre d'entraînement 12 et la platine de connexion 10, est également le plus en arrière possible, l'objectif de la caméra et la lentille à son extrémité étant poussés à l'intérieur du logement défini par la forme annulaire de la tête de nettoyage, affleurant par rapport à la carrosserie du véhicule sur lequel le dispositif est implanté.

La position passive est stable dès lors que le liquide injecté dans la chambre 22 par le premier orifice 33 ne génère pas suffisamment de pression pour provoquer le déplacement du piston à l'encontre de l'effort de rappel du ressort 30.

On va maintenant décrire le fonctionnement du dispositif de nettoyage pour que celui-ci passe dans une position active en s'appuyant notamment sur les illustrations des figures 2 et 6.

Lorsque l'on détecte une situation dans laquelle la caméra de recul va potentiellement être utilisée, par exemple lorsque l'embrayage est enclenché, ou bien lorsque la périodicité de nettoyage préalablement définie arrive à terme, un module de commande génère l'envoi de liquide à l'intérieur de la chambre 22 via le premier orifice 33 par le tuyau d'approvisionnement 32. Le liquide crée une pression sur le piston 24 en remplissant la chambre et il pousse sur le piston dans le sens de son éloignement de la paroi proximale. Le déplacement longitudinal du piston vers l'avant de la chambre, selon l'orientation choisie sur les figures, entraîne le déplacement simultané de la caméra 2 vers l'avant du véhicule, en dégagement de la tête de nettoyage 4 qui elle reste fixe.

Le liquide pousse sur le piston en comprimant le ressort 30, et la partie de la chambre se remplissant de liquide, entre la paroi proximale 26 et le piston en déplacement, continue à croître, au moins jusqu'à ce que le liquide atteigne le deuxième orifice 36. Le liquide peut alors sortir par ce deuxième accès. Lorsque le liquide présent dans la chambre s'évacue en partie par le deuxième orifice, le piston 24 trouve une position d'équilibre entre d'une part la pression exercée par le ressort 30, et d'autre part la pression exercée par la quantité d'eau qui s'équilibre entre l'entrée de liquide par le premier accès et la sortie de liquide par le deuxième accès. Le piston tend à reprendre sa place initiale et force le liquide à s'évacuer par le deuxième accès, en le poussant en direction de la tête de nettoyage via le tuyau d'alimentation. La pression exercée sur le liquide dans le tuyau d'alimentation 34 par cet effet de rappel du piston assure une vitesse d'éjection du liquide suffisante en sortie des buses de pulvérisation 20 pour balayer les impuretés et nettoyer correctement la lentille 8.

On note qu'avantageusement selon le mode de réalisation décrit, le liquide de nettoyage qui va être pulvérisé sur la lentille sert au préalable de liquide de régulation de la pression hydraulique pour réaliser le déplacement relatif de la caméra et de la tête de nettoyage et pour faire passer le dispositif de nettoyage de la position passive à la position active. C'est donc le même liquide qui sert tout d'abord liquide de pression et qui sert par la suite, lorsque son action de régulation de la pression hydraulique a permis de positionner le dispositif de nettoyage dans la position active souhaitée, de liquide de nettoyage par éjection vers la lentille au niveau de la tête de nettoyage, qui se trouve à l'extrémité du circuit hydraulique dans lequel circule le liquide de nettoyage et qui passe successivement par la chambre des moyens d'entraînement et par la tête de nettoyage.

Lorsque l'on souhaite repasser le dispositif de nettoyage dans la position passive, notamment pour que la caméra puisse réaliser des prises de vue sans que la tête de nettoyage soit dans le champ, le module de commande génère une instruction de coupure de l'arrivée de liquide dans la chambre. Le ressort 30 pousse alors le piston 24 dans sa position d'origine contre la paroi proximale 26, en refoulant le reste de liquide présent dans la chambre via le premier accès, de sorte que du liquide reste présent dans le tuyau d'approvisionnement, prêt à un usage immédiat lorsque l'on souhaitera à nouveau faire passer le dispositif de nettoyage dans la position active. Le retour du piston dans sa position d'origine, contre la paroi proximale, génère le déplacement simultané de la caméra, en direction de la tête de nettoyage.

La description qui précède explique clairement comment l'invention permet d'atteindre les objectifs qu'elle s'est fixés et notamment de proposer un dispositif de nettoyage dans lequel une tête de nettoyage est apte à nettoyer correctement une lentille de caméra, de recul notamment, tout en ménageant une position passive dans laquelle cette tête ne gêne pas la prise de vue de la caméra, le dispositif de nettoyage devant permettre de passer, facilement et avec un minimum de mouvement, avantageusement de cette position passive à la position active de nettoyage.

Bien entendu, diverses modifications peuvent être apportées par l'homme du métier aux structures du dispositif de nettoyage, qui viennent d'être décrites à titre d'exemples non limitatifs, dès lors que l'on permet un déplacement relatif d'une caméra de prise de vue pour l'aide à la conduite d'un véhicule par rapport à une tête de nettoyage, pour passer d'une position passive dans laquelle la tête et la caméra sont regroupées à une position active dans laquelle elles sont écartées l'une de l'autre pour faciliter le jet de liquide depuis la tête vers la lentille de la caméra. Le mode de réalisation qui a été décrit en détails ci-dessus n'est pas limitatif de l'invention. En tout état de cause, l'invention ne saurait se limiter au mode de réalisation spécifiquement décrit dans ce document, et s'étend en particulier à tous moyens équivalents et à toute combinaison techniquement opérante de ces moyens.

Ainsi, des variantes non représentées sont prévues et certaines sont décrites ci-dessous, sans toutefois que cette liste soit pour autant exhaustive :
- on pourra prévoir que les moyens d'entraînement comportent un moteur électrique qui assure le déplacement relatif en translation de la caméra et de la tête de nettoyage, tandis qu'un circuit d'alimentation indépendant assure l'apport en liquide de nettoyage vers la tête de nettoyage lorsque le dispositif est en position active ;
- on pourra prévoir que l'arbre d'entraînement des moyens d'entraînement est rendu solidaire de la tête de nettoyage et non plus de la caméra et que les déplacements en translation longitudinale du piston et de l'arbre d'entraînement génèrent des déplacements longitudinaux correspondants de la tête de nettoyage. On comprendra que dans ce cas, au lieu de chercher à déplacer la caméra longitudinalement vers l'arrière, on cherchera à déplacer la tête de nettoyage longitudinalement vers l'avant, dans le même but final de dégager la tête par rapport à la caméra et permettre l'éjection de liquide de nettoyage depuis les buses de pulvérisation de la tête vers la lentille de la caméra ;
- on pourra prévoir que les conditions de déclenchement du nettoyage de la lentille de la caméra soient distinctes, et notamment que le liquide soit amené vers la tête de nettoyage simultanément à un nettoyage de la vitre arrière du véhicule.

## Revendications

1. Dispositif de nettoyage (1) d'une lentille (8) de caméra (2) d'un véhicule automobile par l'intermédiaire d'une tête de nettoyage (4), le dispositif comportant des moyens d'entraînement (6) de la caméra ou de la tête de nettoyage, aptes à générer un déplacement longitudinal relatif de la tête de nettoyage (4) par rapport à la caméra (2) entre une position passive dans laquelle la tête de nettoyage est disposée hors du champ de prise de vue de la caméra et une position active dans laquelle la tête de nettoyage s'étend en regard de la lentille pour permettre l'éjection de liquide de nettoyage en direction de ladite lentille, la caméra (2) comportant un objectif (7) à l'extrémité duquel ladite lentille (8) est disposée, **caractérisé en ce que** la tête de nettoyage (4) présente une forme complémentaire dudit objectif de manière à pouvoir être disposée autour de l'objectif dans ladite position passive, ladite tête de nettoyage présentant un axe qui est confondu avec un axe de l'objectif et de la lentille, **en ce que** l'objectif (7) de la caméra (2) présente une section circulaire, **en ce que** la tête de nettoyage (4) présente une forme annulaire de dimensions aptes à venir en recouvrement autour de l'objectif, et **en ce qu'**il comporte un tuyau d'alimentation (34) de liquide relié à la tête de nettoyage (4), qui comporte en outre une face d'extrémité longitudinale interne (18) munie d'une pluralité de buses (20) par lesquelles le liquide de nettoyage est apte à sortir de ladite tête en direction de la lentille (8) dans ladite position active.

2. Dispositif de nettoyage selon la revendication 1, **caractérisé en ce que** ladite face d'extrémité longitudinale interne (18) est inclinée par rapport au plan perpendiculaire à l'axe de la tête de nettoyage annulaire, de sorte que les buses (20) sont orientées pour éjecter le liquide en direction de l'axe de la tête de nettoyage (4) annulaire.

3. Dispositif de nettoyage (1) d'une lentille (8) de caméra (2) d'un véhicule automobile par l'intermédiaire d'une tête de nettoyage (4), le dispositif comportant des moyens d'entraînement (6) de la caméra ou de la tête de nettoyage, aptes à générer un déplacement longitudinal relatif de la tête de nettoyage (4) par rapport à la caméra (2) entre une position passive dans laquelle la tête de nettoyage est disposée hors du champ de prise de vue de la caméra et une position active dans laquelle la tête de nettoyage s'étend en regard de la lentille pour permettre l'éjection de liquide de nettoyage en direction de ladite lentille, la caméra (2) comportant un objectif (7) à l'extrémité duquel ladite lentille (8) est disposée, **caractérisé en ce que** les moyens d'entraînement (6) de la tête de nettoyage (4) ou de la caméra (2) sont hydrauliques et comportent une chambre (22) dans lequel est apte à coulisser un piston (24), solidaire de la caméra (2) ou de la tête de nettoyage (4), sous l'effet de la pression d'un liquide circulant entre un premier orifice (33) et un deuxième orifice (36) respectivement formés dans la ladite chambre, ledit piston étant rappelé en position par un ressort (30) logé dans ladite chambre,
et **en ce que** le premier orifice (33) est relié à un tuyau d'approvisionnement de liquide et **en ce que** le deuxième orifice (36) est relié à un tuyau distinct d'alimentation (34) relié à une autre extrémité à la tête de nettoyage (4).

4. Dispositif de nettoyage selon la revendication 3, **caractérisé en ce que** le liquide faisant pression sur le piston (24), et déplaçant la caméra (2) ou la tête de nettoyage (4), est du liquide de nettoyage apte à être utilisé pour le nettoyage de la lentille (8).

5. Dispositif de nettoyage selon l'une des revendications précédentes, **caractérisé en ce que** les moyens d'entraînement (6) sont agencés pour réaliser un déplacement longitudinal relatif de la tête de nettoyage (4) par rapport à la caméra (2), de sorte que dans la position passive, la tête de nettoyage se trouve longitudinalement en amont de la lentille (8) tandis que dans la position active, ladite tête se trouve longitudinalement à distance de la caméra, en aval de la lentille.

6. Dispositif de nettoyage selon l'une des revendications précédentes, **caractérisé en ce qu'**il comporte en outre des moyens de guidage (14, 16) en déplacement longitudinal de la caméra (2) ou de la tête de nettoyage (4).

7. Dispositif de nettoyage selon la revendication 6, **caractérisé en ce que** les moyens de guidage (14, 16) sont portés par les moyens d'entraînement (6).

8. Dispositif de nettoyage selon la revendication 7, **caractérisé en ce que** les moyens de guidage consistent en une tige (16) solidaire des moyens d'entraînement (6) et en un fourreau (14) disposé en saillie de la caméra (2) ou de la tête de nettoyage (4) et dans lequel ladite tige est apte à coulisser.

9. Dispositif de nettoyage selon l'une des revendications 1 à 8, **caractérisé en ce que** les moyens d'entraînement (6) sont rendus solidaires de la caméra (2), qui est apte à suivre le déplacement généré par lesdits moyens d'entraînement tandis que la tête de nettoyage (4) reste fixe.

10. Dispositif de nettoyage selon l'une des revendications 1 à 8, **caractérisé en ce que** les moyens d'entraînement sont rendus solidaires de la tête de nettoyage (4), qui est apte à suivre le déplacement généré par lesdits moyens d'entraînement (6) tandis que la caméra (2) reste fixe.

11. Véhicule automobile comportant un dispositif de nettoyage (1) d'une caméra (2) selon l'une des revendications précédentes.

12. Véhicule automobile selon la revendication précédente, **caractérisé en ce que** la caméra (2) apte à être nettoyée par ledit dispositif de nettoyage (1) est une caméra de recul, disposée à l'arrière du véhicule et orientée pour prendre des vues d'une scène de route s'étendant à l'arrière du véhicule.

13. Véhicule automobile comportant un dispositif de nettoyage selon la revendication 9, dans lequel la tête de nettoyage (4) est rendue fixe par rapport à la structure du véhicule automobile, de sorte à être sensiblement affleurante par rapport à la carrosserie extérieure du véhicule, la caméra (2) étant rendue mobile entre une position passive en retrait par rapport à la tête de nettoyage et une position active de prise de vue dans laquelle la lentille (8) disposée à l'extrémité de la caméra est également affleurante par rapport à la carrosserie extérieure.

## Patentansprüche

1. Reinigungsvorrichtung (1) für eine Linse (8) einer Kamera (2) eines Kraftfahrzeugs mit Hilfe eines Reinigungskopfes (4), wobei die Vorrichtung Antriebsmittel (6) der Kamera oder des Reinigungskopfes umfasst, die geeignet sind, eine relative Längsverlagerung des Reinigungskopfes (4) in Bezug zur Kamera (2) zwischen einer passiven Position, in der der Reinigungskopf außerhalb des Aufnahmefeldes der Kamera angeordnet ist, und einer aktiven Position, in der sich der Reinigungskopf gegenüber der Linse erstreckt, um die Abgabe von Reinigungsflüssigkeit in Richtung der Linse zu ermöglichen, zu erzeugen, wobei die Kamera (2) ein Objektiv (7) umfasst, an dessen Ende die Linse (8) angeordnet ist, **dadurch gekennzeichnet, dass** der Reinigungskopf (4) eine komplementäre Form zum Objektiv aufweist, um um das Objektiv in der passiven Position angeordnet werden zu können, wobei der Reinigungskopf eine Achse aufweist, die mit einer Achse des Objektivs und der Linse zusammenfällt, dass das Objektiv (7) der Kamera (2) einen kreisförmigen Querschnitt aufweist, dass der Reinigungskopf (4) eine Ringform mit Abmessungen aufweist, die geeignet sind, um das Objektiv zur Abdeckung zu gelangen, und dass sie ein Versorgungsrohr (34) mit Flüssigkeit umfasst, das mit dem Reinigungskopf (4) verbunden ist, der ferner eine innere Längsendfläche (18) umfasst, die mit einer Vielzahl von Düsen (20) versehen ist, durch die die Reinigungsflüssigkeit aus dem Kopf in Richtung der Linse (8) in der aktiven Position austreten kann.

2. Reinigungsvorrichtung nach Anspruch 1, **dadurch gekennzeichnet, dass** die innere Längsendfläche (18) in Bezug zu der Ebene senkrecht auf die Achse des ringförmigen Reinigungskopfes geneigt ist, so dass die Düsen (20) ausgerichtet sind, um die Flüssigkeit in Richtung der Achse des ringförmigen Reinigungskopfes (4) abzugeben.

3. Reinigungsvorrichtung (1) für eine Linse (8) einer Kamera (2) eines Kraftfahrzeugs mit Hilfe eines Reinigungskopfes (4), wobei die Vorrichtung Antriebsmittel (6) der Kamera oder des Reinigungskopfes umfasst, die geeignet sind, eine relative Längsverlagerung des Reinigungskopfes (4) in Bezug zur Kamera (2) zwischen einer passiven Position, in der der Reinigungskopf außerhalb des Aufnahmefeldes der Kamera angeordnet ist, und einer aktiven Position, in der sich der Reinigungskopf gegenüber der Linse erstreckt, um die Abgabe von Reinigungsflüssigkeit in Richtung der Linse zu ermöglichen, zu erzeugen, wobei die Kamera (2) ein Objektiv (7) umfasst, an dessen Ende die Linse (8) angeordnet ist, **dadurch gekennzeichnet, dass** die Antriebsmittel (6) des Reinigungskopfes (4) oder der Kamera (2) hydraulisch sind und eine Kammer (22) umfassen, in der ein Kolben (24), der mit der Kamera (2) oder dem Reinigungskopf (4) verbunden ist, unter der Wirkung des Drucks einer Flüssigkeit, die zwischen einer ersten Öffnung (33) und einer zweiten Öffnung (36), die jeweils in der Kammer ausgebildet sind, zirkuliert, gleiten kann, wobei der Kolben durch eine in der Kammer angeordnete Feder (30) zurückgestellt wird, und dass die erste Öffnung (33) mit einem Rohr zur Flüssigkeitsversorgung verbunden ist, und dass die zweite Öffnung (36) mit einem getrennten Versorgungsrohr (34) verbunden ist, das mit einem anderen Ende des Reinigungskopfes (4) verbunden ist.

4. Reinigungsvorrichtung nach Anspruch 3, **dadurch gekennzeichnet, dass** die Flüssigkeit, die Druck auf den Kolben (24) ausübt und die Kamera (2) oder den Reinigungskopf (4) verlagert, eine Reinigungsflüssigkeit ist, die geeignet ist, für die Reinigung der Linse (8) verwendet zu werden.

5. Reinigungsvorrichtung nach einem der vorhergehenden Ansprüche, **dadurch gekennzeichnet, dass** die Antriebsmittel (6) dazu vorgesehen sind, eine relative Längsverlagerung des Reinigungskopfes (4) in Bezug zur Kamera (2) durchzuführen, so dass sich in der passiven Position der Reinigungskopf längs stromaufwärts zur Linse (8) befindet, während sich in der aktiven Position der Kopf längs in einem Abstand zur Kamera stromabwärts zur Linse befindet.

6. Reinigungsvorrichtung nach einem der vorhergehenden Ansprüche, **dadurch gekennzeichnet, dass** sie ferner Führungsmittel (14, 16) bei der Längsverlagerung der Kamera (2) oder des Reinigungskopfes (4) umfasst.

7. Reinigungsvorrichtung nach Anspruch 6, **dadurch gekennzeichnet, dass** die Führungsmittel (14, 16) von den Antriebsmitteln (6) getragen werden.

8. Reinigungsvorrichtung nach Anspruch 7, **dadurch gekennzeichnet, dass** die Führungsmittel in einer Stange (16), die mit den Antriebsmitteln (6) verbunden ist, und einer Hülle (14) bestehen, die aus der Kamera (2) oder dem Reinigungskopf (4) herausragend angeordnet ist und in der die Stange geeignet ist zu gleiten.

9. Reinigungsvorrichtung nach einem der Ansprüche 1 bis 8, **dadurch gekennzeichnet, dass** die Antriebsmittel (6) mit der Kamera (2) verbunden sind, die geeignet ist, der Verlagerung, die von den Antriebsmitteln erzeugt wird, zu folgen, während der Reinigungskopf (4) fest bleibt.

10. Reinigungsvorrichtung nach einem der Ansprüche 1 bis 8, **dadurch gekennzeichnet, dass** die Antriebsmittel mit dem Reinigungskopf (4) verbunden sind, der geeignet ist, der Verlagerung, die von den Antriebsmitteln (6) erzeugt wird, zu folgen, während die Kamera (2) fest bleibt.

11. Kraftfahrzeug, umfassend eine Reinigungsvorrichtung (1) einer Kamera (2) nach einem der vorhergehenden Ansprüche.

12. Kraftfahrzeug nach dem vorhergehenden Anspruch, **dadurch gekennzeichnet, dass** die Kamera (2), die geeignet ist, von der Reinigungsvorrichtung (1) gereinigt zu werden, eine Rückfahrkamera ist, die hinten am Fahrzeug angeordnet und ausgerichtet ist, um Aufnahmen einer Straßenszene, die sich hinter dem Fahrzeug erstreckt, zu machen.

13. Kraftfahrzeug, umfassend eine Reinigungsvorrichtung nach Anspruch 9, bei der der Reinigungskopf (4) in Bezug zur Struktur des Kraftfahrzeugs fest ist, so dass er im Wesentlichen zur äußeren Karosserie des Fahrzeugs bündig ist, wobei die Kamera (2) zwischen einer passiven Position, die in Bezug zum Reinigungskopf zurückgesetzt ist, und einer aktiven Aufnahmeposition, in der die Linse (8), die am Ende der Kamera angeordnet ist, ebenfalls zur äußeren Karosserie bündig ist, beweglich ist.

## Claims

1. Cleaning device (1) for cleaning a lens (8) of a motor vehicle camera (2) using a cleaning head (4), the device comprising drive means (6) for driving the camera or the cleaning head, which are able to generate a relative longitudinal displacement of the cleaning head (4) with respect to the camera (2) between a passive position in which the cleaning head is positioned outside of the image-capturing field of the camera and an active position in which the cleaning head extends facing the lens so as to allow cleaning liquid to be ejected towards the said lens, the camera (2) comprising an objective (7) at the end of which the said lens (8) is positioned, **characterized in that** the cleaning head (4) has a shape that complements the said objective so that it can be positioned around the objective in the said passive position, the said cleaning head having an axis that coincides with an axis of the objective and of the lens, **in that** the objective (7) of the camera (2) has a circular cross section, **in that** the cleaning head (4) has an annular shape of dimensions able to fit with overlap around the objective, and **in that** it comprises a liquid supply pipe (34) connected to the cleaning head (4), which further comprises an internal longitudinal end face (18) provided with a plurality of nozzles (20) via which the cleaning liquid can leave the said head bound for the lens (8) in the said active position.

2. Cleaning device according to Claim 1, **characterized in that** the said internal longitudinal end face (18) is inclined with respect to the plane perpendicular to the axis of the annular cleaning head so that the nozzles (20) are oriented in such a way as to eject the liquid toward the axis of the annular cleaning head (4).

3. Cleaning device (1) for cleaning a lens (8) of a motor vehicle camera (2) using a cleaning head (4), the device comprising drive means (6) for driving the camera or the cleaning head, which are able to generate a relative longitudinal displacement of the cleaning head (4) with respect to the camera (2) between a passive position in which the cleaning head is positioned outside of the image-capturing field of the camera and an active position in which the cleaning head extends facing the lens so as to allow cleaning liquid to be ejected towards the said lens, the camera (2) comprising an objective (7) at the end of which the said lens (8) is positioned, **characterized in that** the drive means (6) for driving the cleaning head (4) or the camera (2) are hydraulic and comprise a chamber (22) in which a piston (24) secured to the camera (2) or to the cleaning head (4) is able to slide under the effect of the pressure of a liquid circulating between a first orifice (33) and a second orifice (36) which are formed respectively in the said chamber, the said piston being returned to its position by a spring (30) housed in the said chamber, and **in that** the first orifice (33) is connected to a liquid supply pipe and **in that** the second orifice (36) is connected to a separate supply pipe (34) connected to the other end of the cleaning head (4).

4. Cleaning device according to Claim 3, **characterized in that** the liquid applying pressure to the piston (24) and displacing the camera (2) or the cleaning head (4) is cleaning liquid that can be used for cleaning the lens (8) .

5. Cleaning device according to one of the preceding claims, **characterized in that** the drive means (6) are arranged so as to bring about a relative longitudinal displacement of the cleaning head (4) with respect to the camera (2) in such a way that in the passive position the cleaning head lies longitudinally ahead of the lens (8) whereas in the active position the said head lies longitudinally away from the camera, behind the lens.

6. Cleaning device according to one of the preceding claims, **characterized in that** it further comprises guide means (14, 16) for guiding the longitudinal displacement of the camera (2) or of the cleaning head (4).

7. Cleaning device according to Claim 6, **characterized in that** the guide means (14, 16) are borne by the drive means (6).

8. Cleaning device according to Claim 7, **characterized in that** the guide means consist of a rod (16) secured to the drive means (6) and of a sleeve (14) positioned to project from the camera (2) or from the cleaning head (4) and in which the said rod is able to slide.

9. Cleaning device according to one of Claims 1 to 8, **characterized in that** the drive means (6) are secured to the camera (2) which is able to follow the displacement generated by the said drive means whereas the cleaning head (4) remains fixed.

10. Cleaning device according to one of Claims 1 to 8, **characterized in that** the drive means are secured to the cleaning head (4) which is able to follow the displacement generated by the said drive means (6) whereas the camera (2) remains fixed.

11. Motor vehicle comprising a cleaning device (1) for cleaning a camera (2) according to one of the preceding claims.

12. Motor vehicle according to the preceding claim, **characterized in that** the camera (2) that can be cleaned by the said cleaning device (1) is a reversing camera positioned at the rear of the vehicle and oriented to capture images of the road scene extending to the rear of the vehicle.

13. Motor vehicle comprising a cleaning device according to Claim 9, in which the cleaning head (4) is rendered fixed with respect to the structure of the motor vehicle so that it lies substantially flush with the exterior bodywork of the vehicle, the camera (2) being rendered mobile between a passive position set back from the cleaning head and an active image-capturing position in which the lens (8) positioned at the end of the camera is also flush with the exterior bodywork.
